Europäisches Patentamt

European Patent Office

Office européen des brevets

(19)

(11) **EP 0 980 297 B1**

(12) **EUROPÄISCHE PATENTSCHRIFT**

(45) Veröffentlichungstag und Bekanntmachung des Hinweises auf die Patenterteilung:
**08.08.2001   Patentblatt 2001/32**

(51) Int Cl.$^7$: **B23B 27/14**

(21) Anmeldenummer: **98924203.7**

(86) Internationale Anmeldenummer:
**PCT/EP98/02450**

(22) Anmeldetag: **24.04.1998**

(87) Internationale Veröffentlichungsnummer:
**WO 98/51438 (19.11.1998 Gazette 1998/46)**

(54) **SCHNEIDEINSATZ FÜR DIE SPANABHEBENDE BEARBEITUNG**

CUTTING INSERT FOR SHAPING BY CHIPPING

PLAQUETTE DE COUPE POUR USINAGE PAR ENLEVEMENT DE COPEAUX

(84) Benannte Vertragsstaaten:
**AT CH DE DK ES FR GB IT LI NL SE**

(30) Priorität: **13.05.1997   DE 19720022**

(43) Veröffentlichungstag der Anmeldung:
**23.02.2000   Patentblatt 2000/08**

(73) Patentinhaber: **KOMET Präzisionswerkzeuge Robert Breuning GmbH
D-74354 Besigheim (DE)**

(72) Erfinder:
 • **BAXIVANELIS, Konstantin
   D-74354 Besigheim (DE)**
 • **KRUSZYNSKI, Jacek
   D-70190 Stuttgart (DE)**
 • **SCHÜTT, Henry
   D-74343 Sachsenheim 2 (DE)**
 • **HAIDINGER, Hans
   D-74385 Pleidelsheim (DE)**
 • **MORLOCK, Helmut
   D-74369 Löchgau (DE)**

(74) Vertreter: **Wolf, Eckhard, Dr.-Ing. et al
Patentanwälte Wolf & Lutz
Hauptmannsreute 93
70193 Stuttgart (DE)**

(56) Entgegenhaltungen:
 **EP-A- 0 373 292        EP-A- 0 566 085
 EP-A- 0 710 517        WO-A-94/27772
 WO-A-96/18472        DE-A- 4 422 312
 DE-A- 19 539 462**

 • **PATENT ABSTRACTS OF JAPAN vol. 009, no. 063 (M-365), 20.März 1985 & JP 59 196107 A (NIHON YAKIN:KK), 7.November 1984,**

**Beschreibung**

Die Erfindung betrifft einen Schneideinsatz für die spanabhebende Bearbeitung von vorzugsweise metallischen Werkstücken mit mindestens einer durch eine Spanfläche und eine Freifläche begrenzten, sich zwischen zwei Schneidecken erstreckenden Schneidkante, die zwei unter Einschluß eines stumpfen Winkels im Bereich einer dachförmigen Spitze ineinander übergehende, zumindest teilweise wirksame Schneidkantenabschnitte aufweist, wobei die Spanfläche mindestens ein erhabenes Spanformelement aufweist.

Schneideinsätze mit solchen Spanformelementen sind beispielsweise aus der DE-A-44 22 312 bekannt. Die Spanformelemente enden dort vor der Schneidkante und laufen in Richtung Schneidkante keilförmig aus. Mit den erhabenen Spanformelementen wird zwar erreicht, daß der Span durch einen gezielten Krafteinschluß an bestimmten Stellen auseinandergelöst wird, so daß der stabile Spanquerschnitt geschwächt wird und die vom Span ausgehende Krafteinwirkung in den Schneideinsatz reduziert wird. Gleichwohl lassen die Zerspanungseigenschaften des bekannten Schneideinsatzes vor allem beim Anbohrvorgang zu wünschen übrig.

Ausgehend hiervon liegt der Erfindung die Aufgabe zugrunde, einen Schneideinsatz für die spanabhebende Bearbeitung der eingangs angegebenen Art zu entwickeln, der sich durch besonders günstige Eigenschaften beim Anbohrvorgang, durch eine strukturierte Spanbildung und durch ein ruhiges Zerspanen auszeichnet.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß durch eine Unterteilung der Schneidkante in eine voreilende und eine nacheilende Schneidkantenpartie ein weiches Anbohren und ein stabiler maßhaltiger Bohrverlauf ohne seitliche Abdrängung des betreffenden Werkzeugs erzielt werden kann. Um dies zu erreichen, wird gemäß der Erfindung vorgeschlagen, daß das erhabene Spanformelement vom Inneren der Spanfläche aus bis zur Schneidkante reicht und sich dort unter Einschluß der dachförmigen Spitze partiell über die beiden Schneidkantenabschnitte erstreckt.

Ein besonders günstiges Führungsverhalten über den ganzen Bohrvorgang wird erreicht, wenn die Kantenabschnitte und die benachbarten Spanflächenpartien eine das Spanformelement begrenzende Stufe aufweisen und wenn die Schneidkantenabschnitte einen von der Unterkante der Stufe aus zur Schneidecke hin vorzugsweise stetig ansteigenden Verlauf aufweisen. Zweckmäßig erreichen die Schneidkantenabschnitte in ihrem Verlauf zu den Schneidecken hin im wesentlichen das Niveau der Schneidkanten im Bereich des Spanformelements. Als besonders vorteilhaft hat es sich erwiesen, wenn die sich über die Spanfläche erstreckenden Stufenränder auf ihren der jeweiligen Schneidecke zugewandten Seiten mit dem zugehörigen Schneidkantenabschnitt einen Winkel von 90° bis 110° einschließen und dabei als eigenständige Nebenschneiden des Spanformelements fungieren. Um eine Aufteilung des Spans im Bereich der Spanformstufe zu erzielen, kann es von Vorteil sein, wenn die die Nebenschneiden begrenzenden Stufenflächen mit den benachbarten voreilenden Spanflächenpartien einen spitzen Winkel von 75° bis 88° einschließen. Die beim Bearbeitungsvorgang voreilenden Haupt- und Nebenschneiden des Spanformelements führen aufgrund ihrer Stützfunktion zu einem besseren Führungsverhalten und zu einer Reduzierung des Schwingungsaufbaus insbesondere im Bereich der Oberschwingungen mit hohen Frequenzen und damit der Geräuschbildung. Um das Führungsverhalten ohne Spanteilung im Bereich des Spanformelements zu verbessern, ist es von Vorteil, wenn die die Nebenschneiden begrenzenden Stufenflächen mit den benachbarten voreilenden Spanflächenpartien einen stumpfen Winkel von 70° bis 88°, vorzugsweise 75' bis 85° einschließen. Als besonders vorteilhaft für diesen Zweck hat es sich erwiesen, wenn die Länge der Schneidkante im Bereich des Spanformelements 15 bis 40% der gesamten Schneidkantenlänge beträgt.

Zur Verbesserung des Kräfteausgleichs beim Schneidvorgang kann das Spanformelement bezüglich der dachförmigen Spitze auch unsymmetrisch ausgebildet werden. Insbesondere können zu diesem Zweck die voreilenden Schneidkanten- und Spanflächenpartien einen zur einen Schneidecke hin schräg abfallenden und zur anderen Schneidecke hin schräg ansteigenden Verlauf aufweisen.

Um das Führungsverhalten eines mit den erfindungsgemäßen Schneidelementen bestückten Bohrwerkzeug vor allem beim Anbohrvorgang zu verbessern, wird gemäß einer bevorzugten Ausgestaltung der Erfindung vorgeschlagen, daß für die Stufenhöhe des Spanformelements die Beziehung

$$h = a \cdot f/\tan\delta$$

gilt, wobei f den Werkzeugvorschub pro Umdrehung des Maschinenwerkzeugs und δ den Freiwinkel im Bereich der voreilenden Schneidkantenpartie bedeuten und der Faktor a = 0,2 bis 1,5, vorzugsweise 0,3 bis 0,8 beträgt.

Um die Spanbildung und die Spanabfuhr zu verbessern, weisen die Spanflächen im Bereich des Spanformelements und außerhalb des Spanformelements je einen von der Schneidkante aus zunächst abfallenden und sodann bis zu einem kantenabseitigen Plateau ansteigenden konkaven Verlauf auf. Eine weitere Verbesserung in dieser Hinsicht wird dadurch erreicht, daß der Spanwinkel von den Stufenrändern des Spanformelements aus bis zur Schneidecke hin stetig abnimmt.

Die erfindungsgemäßen Schneideinsätze werden bevorzugt in Vollbohrern oder in Doppelschneidern mit mindestens zwei Schneideinsätzen verwendet.

Im folgenden wird die Erfindung anhand eines in der Zeichnung in schematischer Weise dargestellten Ausführungsbeispiels näher erläutert. Es zeigen:

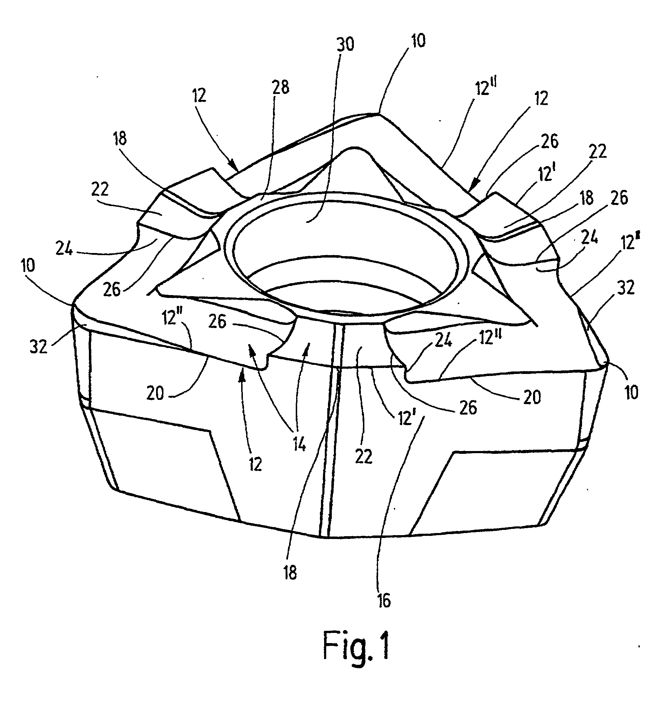

Fig. 1      eine schaubildliche Darstellung eines Schneideinsatzes für die spanabhebende Bearbeitung;

Fig. 2      eine Seitenansicht des Schneideinsatzes in Richtung Freifläche;

Fig. 3      eine Draufsicht des Schneideinsatzes in Richtung Spanflächen;

Fig. 4a      einen vergrößerten Ausschnitt aus Fig. 3 im Bereich des Spanformelements;

Fig. 4b      einen Schnitt entlang der Schnittlinie IV-IV der Fig. 3;

Fig. 5a und b      ein abgewandeltes Ausführungsbeispiel eines Schneideinsatzes in Darstellungen entsprechend Fig. 2 und 3.

Der in der Zeichnung dargestellte Schneideinsatz ist vor allem für Bohrwerkzeuge in Form von Vollbohrern oder Zweischneidenbohrern bestimmt. Er ist als im Umriß sechseckige Wendeschneidplatte ausgebildet, deren drei an den einen spitzen Winkel $\alpha$ einschließenden Schneidecken 10 miteinander verbundene Schneidkanten 12 durch eine Spanfläche 14 und eine Freifläche 16 begrenzt sind und jeweils zwei unter Einschluß eines stumpfen Winkels $\beta$ im Bereich einer dachförmigen Spitze 18 ineinander übergehende Kantenabschnitte 20 aufweisen. Je nach Einspannung der Wendeschneidplatte ist jeweils eine der Schneidkanten 12 mit den zugehörigen Schneidkantenabschnitten 20 wirksam. Die zu jeder Schneidkante 12 gehörende Spanfläche 14 weist ein erhabenes Spanformelement 22 auf, das vom Inneren der Spanfläche 14 aus bis zur betreffenden Schneidkante 12 reicht und sich dort unter Einschluß der dachförmigen Spitze 18 partiell über die beiden Schneidkantenabschnitte 20 erstreckt. Die Schneidkantenabschnitte 20 und die benachbarten Spanflächenpartien 14 weisen eine das Spanformelement 22 begrenzende Stufe 24 auf, deren Randkanten 26 auf ihren der jeweiligen Schneidecke 10 zugewandten Seiten mit dem betreffenden Schneidkantenabschnitt einen Winkel $\gamma > 90°$ einschließen und eine zur voreilenden Schneidkante 12' im Bereich des Spanformelements 22 gehörende voreilende Nebenschneide bilden. Die Länge der voreilenden Schneidkante 12' im Bereich des Spanformelements 22 beträgt bei dem gezeigten Ausführungsbeispiel etwa 25% der gesamten Schneidkantenlänge, während die Höhe h der Stufe 24 des Spanformelements 22 nach der Beziehung

$$h = a \cdot f/\tan\delta$$

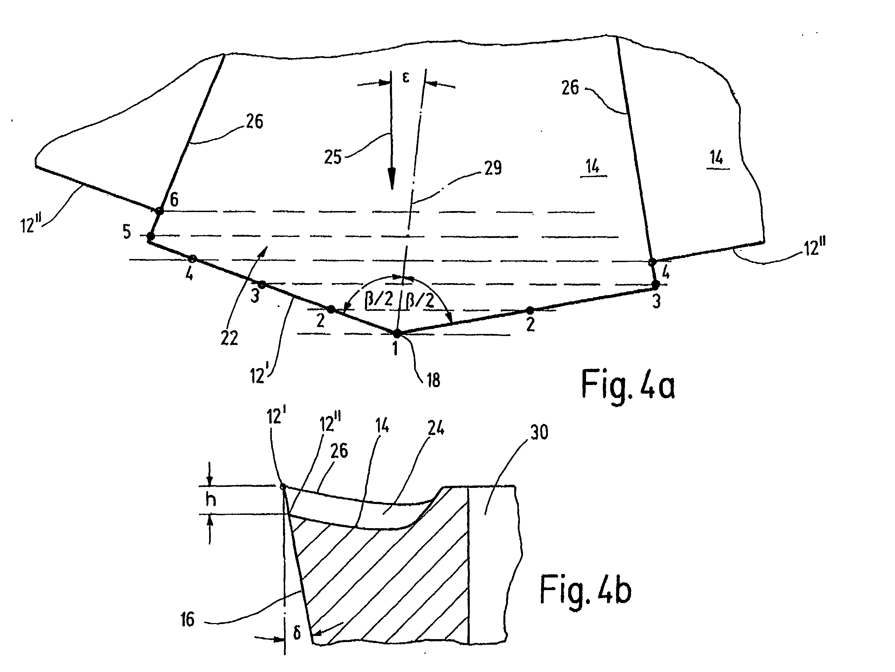

bestimmt wird, wobei f den Werkzeugvorschub pro Umdrehung (Fig. 4a) und $\delta$ den Freiwinkel im Bereich der voreilenden Schneidkantenpartie 12' (Fig. 4b) bedeuten, und der Faktor a bei dem in Fig. 4a gezeigten Ausführungsbeispiel etwa 0,5 beträgt. Die Vorschubrichtung ist in Fig. 4a durch den Pfeil 25 angedeutet, während die zur Vorschubrichtung 25 senkrechten gestrichelten Linien 1,2,3,4,5 und 6 die Lage der Schneidplatte in jeweils Zehntel Umdrehungsschritten (0,1 f) innerhalb des Werkstücks andeuten. Aus Fig. 4a ist zu erkennen, daß die Winkelhalbierende 29 der dachförmigen Spitze 18 mit der Vorschubrichtung 25 einen spitzen Winkel $\epsilon$ einschließt. Beim Anbohrvorgang ergibt sich dadurch eine zeitabhängige Verschiebung der Eingriffstellen an den Schneidkantenabschnitten, die abhängig vom Winkel $\epsilon$ unterschiedlich sein können. Wichtig ist, daß beim Erreichen des Endes der voreilenden Schneidkante 12' eine gewisse Zeit vergeht, bis die nacheilenden Abschnitte 12'' der Schneidkante zum Eingriff kommen. Diese Verzögerung macht bei dem gezeigten Ausführungsbeispiel etwa eine halbe Umdrehung des betreffenden Werkzeugs aus. Das Spanformelement 22 gräbt während dieser halben Umdrehung eine Spur in das Werkstück, die zentrierend und stabilisierend wirkt.

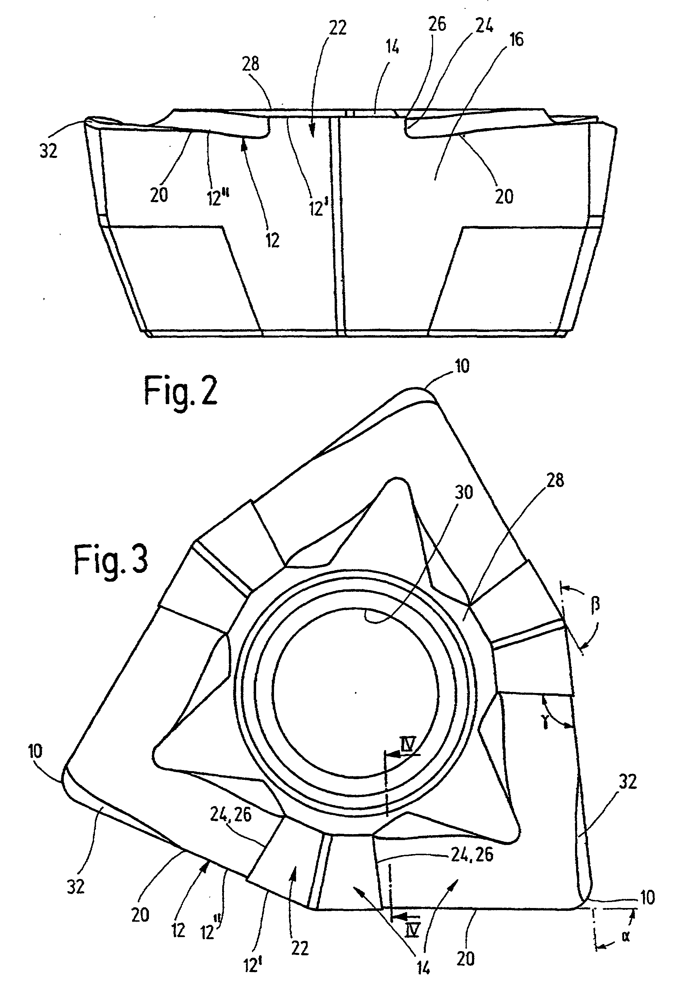

Die nacheilenden Schneidkantenabschnitte 12'' weisen einen von der Unterkante der Stufe 24 aus zur Schneidecke 10 hin stetig ansteigenden Verlauf sowie einen entlang dieser Strecke stetig abnehmenden Spanwinkel auf. Im Bereich der Schneidecken 10 sind die Schneidkanten 12 in Abhängigkeit von der Drehrichtung des Werkzeugs partiell angefast (Fase 32). Die Spanflächen 14 weisen sowohl im Bereich des Spanformelements 22 als auch im Bereich zwischen den Stufen 24 und den Schneidecken 10 einen von der Schneidkante 12', 12'' aus zunächst abfallenden und sodann bis zu einem kantenabseitigen Plateau 28 ansteigenden konkaven Verlauf auf (vgl. Fig. 2). Im Zentrum des Plateaus 28 befindet sich ein Durchbruch 30 für den Durchgriff einer nicht dargestellten Befestigungsschraube.

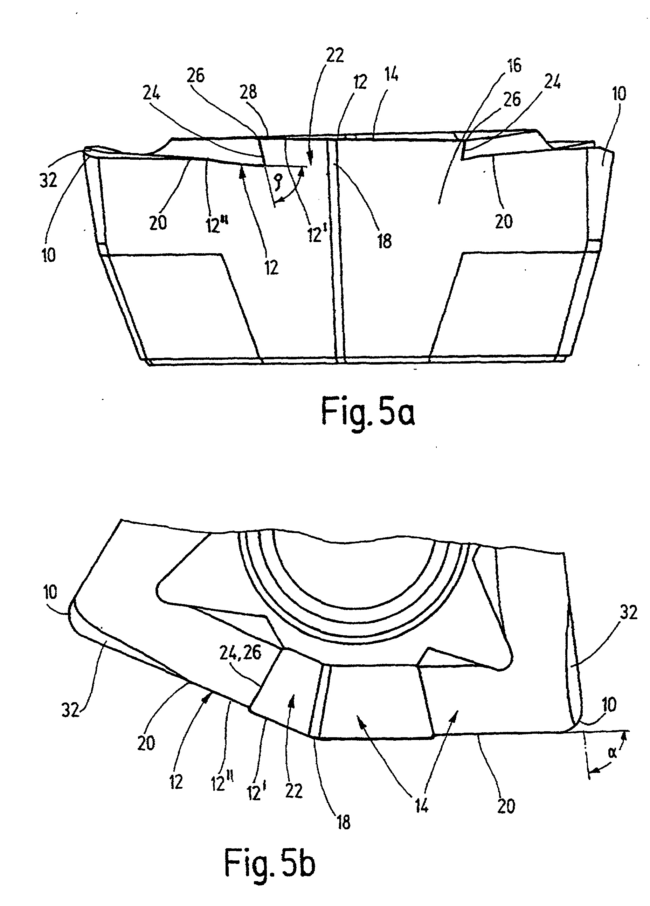

Das Ausführungsbeispiel nach Fig. 5a und b unterscheidet sich von dem in Fig. 2 und 3 gezeigten Ausführungsbeispiel dadurch, daß das Spanformelement 22 bezüglich der Dachspitze 18 asymmetrisch angeordnet ist und eine zur einen (rechten) Schneidecke 10 hin schräg abfallenden und zur anderen (linken) Schneidecke 10 hin ansteigenden Verlauf aufweist. Mit dieser Maßnahme kann bei im Werkzeug einander überlappenden Schneidelementen ein Radialkräfteausgleich beim Bohrvorgang, insbesondere beim Anbohrvorgang, erzielt werden. Weiter ist aus Fig. 5a erkennbar, daß die Nebenschneide 26 des Spanformelements im Bereich der Stufe 24 mit einem Schneidwinkel ρ hinterschnitten ist. Mit dieser Maßnahme kann eine für die Spanabfuhr günstige Spanverformung oder Spanteilung hervorgerufen werden.

Zusammenfassend ist folgendes festzustellen: Die Erfindung bezieht sich auf einen Schneideinsatz für die spanabhebende Bearbeitung von metallischen Werkstücken. Der Schneideinsatz ist vor allem für die Verwendung in Vollbohrern oder in Doppelschneidern geeignet. Er weist mindestens eine durch eine Spanfläche 14 und eine Freifläche 16 begrenzte, sich zwischen zwei Schneidecken 10 erstreckende Schneidkante 12 auf, die zwei unter Einschluß eines stumpfen Winkels im Bereich einer dachförmigen Spitze 18 ineinander übergehende, zumindest teilweise wirksame Schneidkantenabschnitte 20 aufweist. In der Spanfläche 14 befindet sich ein erhabenes Spanformelement, das vom Inneren der Spanfläche 14 aus bis zur Schneidkante 12 reicht und sich dort über die dachförmige Spitze 18 hinweg partiell über die beiden Schneidkantenabschnitte 20 erstreckt. Die Schneidkantenabschnitte 20 und die benachbarten Spanflächen 14 weisen eine das Spanformelement 22 begrenzende Stufe 24 auf, deren Randkanten 26 als Nebenschneiden des Spanformelements 22 fungieren.

## Patentansprüche

1. Schneideinsatz für die spanabhebende Bearbeitung von vorzugsweise metallischen Werkstücken mit mindestens einer durch eine Spanfläche (14) und eine Freifläche (16) begrenzten, sich zwischen zwei Schneidecken (10) erstreckenden Schneidkante (12), die zwei unter Einschluß eines stumpfen Winkels (β) im Bereich einer dachförmigen Spitze (18) ineinander übergehende, zumindest teilweise wirksame Schneidkantenabschnitte (20) aufweist, wobei die Spanfläche (14) ein erhabenes Spanformelement (22) aufweist, dadurch gekennzeichnet daß das Spanformelement vom Inneren der Spanfläche (14) aus bis zur Schneidkante (12) reicht und sich dort unter Einschluß der dachförmigen Spitze (18) partiell über die beiden Schneidkantenabschnitte (20) erstreckt.

2. Schneideinsatz nach Anspruch 1, **dadurch gekennzeichnet,** daß die Schneidkantenabschnitte (20) und die benachbarten Spanflächenteile (14) eine das Spanformelement (22) begrenzende Stufe (24) aufweisen.

3. Schneideinsatz nach Anspruch 2, **dadurch gekennzeichnet,** daß die außerhalb des Spanformelements (22) befindlichen nacheilenden Partien (12'') der Schneidkanten (12) einen von der Unterkante der jeweiligen Stufe (24) aus zur benachbarten Schneidecke (10) hin vorzugsweise stetig ansteigenden Verlauf aufweisen.

4. Schneideinsatz nach Anspruch 3, **dadurch gekennzeichnet,** daß die nacheilenden Partien (12'') der Schneidkanten (12) in ihrem Verlauf zu den Schneidecken (10) hin im wesentlichen das Niveau der innerhalb des Spanformelements (22) befindlichen voreilenden Partien (12') der Schneidkanten (12) erreichen.

5. Schneideinsatz nach einem der Ansprüche 1 bis 4, **dadurch gekennzeichnet,** daß die sich über die Spanfläche (14) erstreckenden Stufenränder (24) auf ihren der jeweiligen Schneidecke (10) zugewandten Seite mit dem zugehörigen Schneidkantenabschnitt (20) einen Winkel (γ) von 80° bis 120°, vorzugsweise 95° bis 105°, einschließen.

6. Schneideinsatz nach einem der Ansprüche 1 bis 5, **dadurch gekennzeichnet,** daß die Spanfläche (14) im Bereich des Spanformelements (22) einen von der voreilenden Schneidkantenpartie (12') aus zunächst abfallenden und sodann bis zu einem kantenabseitigen Plateau (28) ansteigenden konkaven Verlauf aufweist.

7. Schneideinsatz nach einem der Ansprüche 1 bis 6, **dadurch gekennzeichnet,** daß die Spanfläche (14) im Bereich zwischen der Stufe (24) und der benachbarten Schneidecke (10) einen von der nacheilenden Schneidkantenpartie (12'') aus zunächst abfallenden und sodann bis zu einem kantenabseitigen Plateau (28) zum Teil stufenförmig ansteigenden, konkaven Verlauf aufweist.

8. Schneideinsatz nach einem der Ansprüche 1 bis 7, **dadurch gekennzeichnet,** daß der Spanwinkel der nacheilenden Schneidkantenpartie (12'') von der Stufe (24) aus bis zur benachbarten Schneidecke (10) hin stetig abnimmt.

9. Schneideinsatz nach einem der Ansprüche 5 bis 8, **dadurch gekennzeichnet,** daß die Randkanten (26) der Stufen (24) als Nebenschneiden des Spanformelements (22) ausgebildet sind.

10. Schneideinsatz nach einem der Ansprüche 1 bis 9, **dadurch gekennzeichnet,** daß die Länge der voreilenden Schneidkante (12') im Bereich des Spanformelements (22) 15 bis 50% der Gesamtlänge der Schneidkante (12) beträgt.

11. Schneideinsatz nach einem der Ansprüche 1 bis 10, **dadurch gekennzeichnet,** daß das Spanformelement (22) bezüglich der dachförmigen Spitze (18) unsymmetrisch ausgebildet ist.

**12.** Schneideinsatz nach einem der Ansprüche 1 bis 11, **dadurch gekennzeichnet,** daß die voreilende Schneidkantenpartie (12') einen zur einen Schneidecke (10) hin schräg abfallenden und zur anderen Schneidecke (10) hin schräg ansteigenden Verlauf aufweist.

**13.** Schneideinsatz nach einem der Ansprüche 9 bis 12, **dadurch gekennzeichnet,** daß die die Nebenschneiden begrenzenden Stufenflächen (24) mit den benachbarten voreilenden Spanflächenpartien (14) einen spitzen Winkel ($\rho$) von 75° bis 88°, vorzugsweise von 79° bis 84° einschließen.

**14.** Schneideinsatz nach einem der Ansprüche 9 bis 12, **dadurch gekennzeichnet,** daß die die Nebenschneiden (26) begrenzenden Stufenflächen (24) mit den benachbarten voreilenden Spanflächenpartien (14) einen stumpfen Winkel ($\rho$) von 92° bis 110°, vorzugsweise 95° bis 105° einschließen.

**15.** Schneideinsatz nach einem der Ansprüche 1 bis 10 mit mehreren, einen vorzugsweise als Dreieck ausgebildetes Vieleck begrenzenden, aus jeweils zwei Kantenabschnitten (20) bestehenden Schneidkanten (12), **dadurch gekennzeichnet,** daß die zwischen den einzelnen Schneidkanten (12) befindlichen Schneidecken (10) zumindest partiell verfast sind.

**16.** Maschinenwerkzeug mit einem Schneideinsatz nach einem der Ansprüche 1 bis 15, wobei das Werkzeug beim Bearbeitungsvorgang relativ zu einem Werkstück vorgeschoben (Pfeil 25) und gedreht wird, **dadurch gekennzeichnet,** daß für die Stufenhöhe (h) des Spanformelements (22) die Beziehung

$$h = a \cdot f/\tan\delta$$

gilt, wobei f den Werkzeugvorschub pro Umdrehung und $\delta$ den Freiwinkel im Bereich der voreilenden Schneidkantenpartie (12') bedeuten und der Faktor a = 0,2 bis 1,5, vorzugsweise 0,3 bis 0,8 beträgt.

**17.** Maschinenwerkzeug nach Anspruch 16, **dadurch gekennzeichnet,** daß es als Vollbohrer oder als Doppelschneider mit mindestens zwei Schneideinsätzen nach einem der Ansprüche 1 bis 15 ausgebildet ist.

## Claims

**1.** A cutting insert for shaping by chipping preferably of metallic workpieces with at least one cutting edge (12) extending between two cutting corners (10) and defined by a chipping face (14) and a flank (16), which cutting edge (12) has two at least partly active cutting edge sections (20), which form an obtuse angle ($\beta$) and merge into each other in the area of a roof-shaped tip (18), whereby the chipping face (14) has a raised shaped chipping element (22), characterized in that the shaped chipping element extends from the interior of the chipping face (14) to the cutting edge (12) and there extends partially over the two cutting edge sections (20) forming the roof-shaped tip (18).

**2.** The cutting insert according to Claim 1, characterized in that the cutting edge sections (20) and the adjacent chipping face portions (14) have a step (24) defining the shaped chipping element (22).

**3.** The cutting insert according to Claim 2, characterized in that the trailing portions (12") of the cutting edges (12), which portions are provided outside of the shaped chipping element (22), extend preferably continuously rising from the bottom edge of the respective step (24) toward the adjacent cutting corner (10).

**4.** The cutting insert according to Claim 3, characterized in that the trailing portions (12") of the cutting edges (12) reach in their extent toward the cutting corners (10) essentially the level of the leading portions (12') of the cutting edges (12), which leading portions are provided within the shaped chipping element (22).

**5.** The cutting insert according to one of the Claims 1 to 4, characterized in that the step edges (24) extending over the chipping face (14) form an angle ($\gamma$) of 80° to 120°, preferably 95° to 105°, with the associated cutting edge section (20) on their side facing the respective cutting corner (10).

**6.** The cutting insert according to one of the Claims 1 to 5, characterized in that the chipping face (14) extends concavely in the area of the shaped chipping element (22) from the leading cutting edge portion (12') initially declining and then inclining to a plateau (28) remote from the edge.

**7.** The cutting insert according to one of the Claims 1 to 6, characterized in that the chipping face (14) extends concavely in the area between the step (24) and the adjacent cutting corner (10) from the trailing cutting edge portion (12") initially dropping and then rising partially step-shaped up to the plateau remote from the edge.

8. The cutting insert according to one of the Claims 1 to 7, characterized in that the chipping angle of the trailing cutting edge portion (12") decreases continuously from the step (24) toward the adjacent cutting corner (10).

9. The cutting insert according to one of the Claims 5 to 8, characterized in that the edges (26) of the steps (24) are designed as additional cutting edges of the shaped chipping element (22).

10. The cutting insert according to one of the Claims 1 to 9, characterized in that the length of the leading cutting edge (12') is 15 to 50% of the entire length of the cutting edge (12) in the area of the shaped chipping element (22).

11. The cutting insert according to one of the Claims 1 to 10, characterized in that the shaped chipping element (22) is designed asymmetrically with respect to the roof-shaped tip (18).

12. The cutting insert according to one of the Claims 1 to 11, characterized in that the leading cutting edge portion (12') extends inclined dropping toward one cutting corner (10) and inclined rising toward the other cutting corner (10).

13. The cutting insert according to one of the Claims 9 to 12, characterized in that the step surfaces (24) limiting the additional cutting edges form an acute angle ($\rho$) of 75° to 88°, preferably 79° to 84°, with the adjacent leading chipping face portions (14).

14. The cutting insert according to one of the Claims 9 to 12, characterized in that the step surfaces (26) limiting the additional cutting edges (24) form an obtuse angle ($\rho$) of 92° to 110°, preferably 95° to 105°, with the adjacent leading chipping face portions (14).

15. The cutting insert according to one of the Claims 1 to 10 with several cutting edges (12), which limit a polygon preferably designed as a triangle and consisting of each two edge sections (20), characterized in that the cutting corners (10) provided between the individual cutting edges (12) are at least partially chamfered.

16. A machine tool with a cutting insert according to one of the Claims 1 to 15, whereby the tool is shifted (arrow 25) and turned relative to a workpiece during the machining operation, characterized in that the equation

$$h = a \cdot f/\tan \delta$$

applies for the step height (h) of the shaped chipping element (22), whereby f is the tool feed per rotation, and $\delta$ is the clearance angle in the area of the leading cutting edge portion (12') and the factor a is = 0.2 to 1.5, preferably 0.3 to 0.8.

17. A machine tool according to Claim 16, characterized in that it is designed as a solid drill or as a double bit cutter with at least two cutting inserts according to one of the Claims 1 to 15.

## Revendications

1. Plaquette de coupe pour l'usinage, par enlèvement de copeaux, de pièces préférentiellement métalliques, présentant au moins une arête de coupe (12) qui est délimitée par une face d'attaque (14) et par une face de dépouille (16), s'étend entre deux coins sectionneurs (10) et comporte deux zones marginales (20) au moins partiellement opérantes, fusionnant l'une dans l'autre en décrivant un angle obtus ($\beta$) dans la région d'une pointe (18) en forme de toiture, la face d'attaque (14) étant munie d'un élément proéminent (22) de formage par enlèvement de copeaux, caractérisée par le fait que ledit élément de formage par enlèvement de copeaux part de l'intérieur de la face d'attaque (14) et gagne l'arête de coupe (12) sur laquelle il s'étend partiellement, en englobant la pointe (18) en forme de toiture, sur les deux zones marginales (20) de ladite arête de coupe.

2. Plaquette de coupe selon la revendication 1, caractérisée par le fait que les zones marginales (20) de l'arête de coupe, et les parties voisines (14) de la face d'attaque, possèdent un gradin (24) délimitant l'élément (22) de formage par enlèvement de copeaux.

3. Plaquette de coupe selon la revendication 2, caractérisée par le fait que les parties de fuite (12") des arêtes de coupe (12), situées à l'extérieur de l'élément (22) de formage par enlèvement de copeaux, présentent une allure à croissance préférentiellement constante à partir du bord inférieur du gradin (24) considéré, jusqu'au bord sectionneur (10) voisin.

4. Plaquette de coupe selon la revendication 3, caractérisée par le fait que l'allure des parties de fuite (12") des arêtes de coupe (12), en direction des coins sectionneurs (10), atteint pour l'essentiel le niveau des parties d'attaque (12') desdites arêtes de coupe (12) qui sont situées à l'intérieur de l'élément (22) de formage par enlèvement de copeaux.

5. Plaquette de coupe selon l'une des revendications 1 à 4, caractérisée par le fait que les bords du gradin (24) qui s'étendent sur la face d'attaque (14) décrivent, sur leur côté tourné vers le coin sectionneur (10) considéré, avec la zone marginale associée (20) de l'arête de coupe, un angle (y) de 80° à 120°, préférentiellement de 95° à 105°.

6. Plaquette de coupe selon l'une des revendications 1 à 5, caractérisée par le fait que la face d'attaque (14) possède, dans la région de l'élément (22) de formage par enlèvement de copeaux, une allure concave qui décline tout d'abord depuis la partie d'attaque (12') de l'arête de coupe, puis monte jusqu'à un plateau (28) en retrait vis-à-vis du bord.

7. Plaquette de coupe selon l'une des revendications 1 à 6, caractérisée par le fait que la face d'attaque (14) présente, dans la région située entre le gradin (24) et le coin sectionneur (10) voisin, une allure concave qui décline tout d'abord depuis la partie de fuite (12'') de l'arête de coupe, puis monte partiellement en forme de gradin jusqu'à un plateau (28) en retrait vis-à-vis du bord.

8. Plaquette de coupe selon l'une des revendications 1 à 7, caractérisée par le fait que l'angle d'attaque de la partie de fuite (12'') de l'arête de coupe décroît, de façon permanente, depuis le gradin (24) jusqu'au coin sectionneur (10) voisin.

9. Plaquette de coupe selon l'une des revendications 5 à 8, caractérisée par le fait que les bords marginaux (26) des gradins (24) sont réalisés sous la forme de tranchants auxiliaires de l'élément (22) de formage par enlèvement de copeaux.

10. Plaquette de coupe selon l'une des revendications 1 à 9, caractérisée par le fait que la longueur de l'arête antérieure de coupe (12') représente, dans la région de l'élément (22) de formage par enlèvement de copeaux, de 15 à 50 % de la longueur totale de l'arête de coupe (12).

11. Plaquette de coupe selon l'une des revendications 1 à 10, caractérisée par le fait que l'élément (22) de formage par enlèvement de copeaux est de réalisation asymétrique vis-à-vis de la pointe (18) en forme de toiture.

12. Plaquette de coupe selon l'une des revendications 1 à 11, caractérisée par le fait que la partie d'attaque (12') de l'arête de coupe présente une allure déclinant à l'oblique en direction de l'un (10) des coins sectionneurs, et montant à l'oblique en direction de l'autre coin sectionneur (10).

13. Plaquette de coupe selon l'une des revendications 9 à 12, caractérisée par le fait que les surfaces du gradin (24) qui délimitent les tranchants auxiliaires décrivent, avec les parties voisines d'attaque de la face d'attaque (14), un angle aigu ($\rho$) compris entre 75° et 88°, de préférence entre 79° et 84°.

14. Plaquette de coupe selon l'une des revendications 9 à 12, caractérisée par le fait que les surfaces du gradin (24) qui délimitent les tranchants auxiliaires (26) décrivent, avec les parties voisines d'attaque de la face d'attaque (14), un angle obtus ($\rho$) compris entre 92° et 110°, de préférence entre 95° et 105°.

15. Plaquette de coupe selon l'une des revendications 1 à 10, comprenant plusieurs arêtes de coupe (12) qui délimitent un polygone préférentiellement réalisé comme un triangle, et sont respectivement constituées de deux zones marginales (20), caractérisée par le fait que les coins sectionneurs (10), situés entre les arêtes de coupe (12) individuelles, sont au moins partiellement biseautés.

16. Outil d'usinage équipé d'une plaquette de coupe selon l'une des revendications 1 à 15, ledit outil étant animé, au cours du processus d'usinage, d'un coulissement (flèche 25) et d'une rotation par rapport à une pièce à usiner, caractérisé par le fait que la hauteur (h) du gradin de l'élément (22) de formage par enlèvement de copeaux obéit à la relation

$$h = a \cdot f/\tan\delta,$$

sachant que $\underline{f}$ et $\delta$ signifient, respectivement, l'avance de l'outil pour chaque tour complet et l'angle de dépouille dans la région de la partie antérieure (12') de l'arête de coupe, et que le facteur a = 0,2 à 1,5, de préférence 0,3 à 0,8.

17. Outil d'usinage selon la revendication 16, caractérisé par le fait qu'il est réalisé sous la forme d'un foret intégral ou d'un burin double, muni d'au moins deux plaquettes de coupe selon l'une des revendications 1 à 15.

Fig.1

Fig. 2

Fig. 3

Fig. 4a

Fig. 4b

Fig. 5a

Fig. 5b